# EUROPEAN PATENT APPLICATION

(11) **EP 4 818 284 A1**
(43) Date of publication of application: **07.10.2026**
(21) Application number: 26164538.6
(22) Date of filing: 13.03.2026
(51) Int. Cl.: C09J 7/38, C09J 133/04

(54) **ADHESIVE SHEET**

(30) Priority: 03.04.2025 KR 20250043423
(71) Applicant: SAMSUNG SDI CO., LTD., Yongin-si, Gyeonggi-do 17084 (KR)
(72) Inventor: KIM, Tae Ji, 16678 Suwon-si, Gyeonggi-do (KR); NAM, Irina, 16678 Suwon-si, Gyeonggi-do (KR); KIM, Il Jin, 16678 Suwon-si, Gyeonggi-do (KR); LEE, Joo Hoon, 16678 Suwon-si, Gyeonggi-do (KR); SONG, Kyung Hyun, 16678 Suwon-si, Gyeonggi-do (KR); KANG, Seung Hyun, 16678 Suwon-si, Gyeonggi-do (KR); KIM, Won, 16678 Suwon-si, Gyeonggi-do (KR)
(74) Representative: Michalski Hüttermann & Partner mbB

(57) **Abstract**

An adhesive sheet includes a first adhesive layer including a (meth)acrylic binder having a (meth)acrylate group on a side chain thereof, a silicone oligomer, and an oligomer having a glass transition temperature of 10°C or higher. The first adhesive layer has a peel strength ratio of 0.5 or less, which is a ratio of a peel strength of the first adhesive layer with respect to an adherend after the first adhesive layer attached to the adherend is heated at 230°C for 10 minutes and irradiated with UV light versus an initial peel strength of the first adhesive layer.

## Description

### CROSS-REFERENCE TO RELATED APPLICATION

The present application claims priority to and the benefit of Korean Patent Application No. 10-2025-0043423, filed on April 3, 2025, in the Korean Intellectual Property Office, the entire disclosure of which is incorporated herein by reference.

### BACKGROUND

### 1. Field

The present disclosure relates to an adhesive sheet.

### 2. Description of the Related Art

A semiconductor chip may be manufactured by several processes (e.g., through multiple processing steps). During the process of manufacturing the semiconductor chip, an adhesive tape may be used to improve handling of the semiconductor chip while preventing or suppressing damage to the semiconductor chip. Generally, the adhesive tape for semiconductor chips is a double-sided adhesive tape. With a silicon wafer bonded to one surface of the adhesive tape, the adhesive tape may be subjected to various processes, including an etching process using an etching solution and high temperature treatment processes, such as solder formation and chip mounting. The adhesive tape is then removed from the silicon wafer.

The adhesive tape bonded to the silicon wafer is subjected to UV irradiation to increase the curing density of an adhesive layer in the adhesive tape so as to prevent or suppress an increase in peel strength of the adhesive layer.

However, in recent years, the temperature used in the high temperature treatment has been increased. In addition, if irregularities are formed on a surface of the silicon wafer, the peel strength of the adhesive layer can be increased further after the high temperature treatment, thereby making it difficult to remove the adhesive tape from the silicon wafer. Moreover, after removal of the adhesive tape, a residue of the adhesive layer can remain on the silicon wafer.

### SUMMARY

One aspect according to embodiments of the present disclosure is to provide an adhesive sheet that has high chemical resistance and high initial adhesion to an adherend, and includes an adhesive layer attached to the adherend and having a low peel strength increase rate relative to the initial peel strength after high temperature treatment and light irradiation.

One aspect according to embodiments of the present disclosure is to provide an adhesive sheet that leaves no adhesive residue on an adherend when the adhesive sheet is peeled off of the adherend after the adhesive sheet attached to the adherend is subjected to high temperature treatment and light irradiation.

Additional aspects will be set forth in part in the description which follows and, in part, will be apparent from the description, or may be learned by practice of the presented embodiments of the disclosure.

In one or more embodiments, an adhesive sheet includes a first adhesive layer including a (meth)acrylic binder having a (meth)acrylate group on a side chain thereof, a silicone oligomer, and an oligomer having a glass transition temperature of 10°C or higher, wherein the first adhesive layer has a peel strength ratio of 0.5 or less, as calculated according to Equation 1: $Peel strength ratio = PS 2 / PS 1 ,$ (1)
where PS1 is an initial peel strength (unit: gf/inch) of the first adhesive layer with respect to an adherend, and
PS2 is a peel strength (unit: gf/inch) of the first adhesive layer with respect to the adherend after the first adhesive layer attached to the adherend is left at 230°C for 10 minutes and irradiated with UV light.

According to one or more embodiments, the adhesive sheet has good chemical resistance and prevent or suppress (does not allow) loss of an adhesive layer in an etching process in semiconductor manufacturing, thereby improving reliability of semiconductor manufacturing.

According to embodiments, the adhesive sheet has high initial adhesive strength with respect to an adherend and ensures a low peel strength increase rate relative to the initial peel strength and leaves no adhesive layer residue on the adherend when the adhesive sheet is peeled off of the adherend after the adhesive sheet attached to the adherend has been subjected to high temperature treatment and light irradiation.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure.
FIG. 1 is a cross-sectional view of an adhesive sheet according to one or more embodiments.
FIG. 2 is a cross-sectional view of an adhesive sheet according to one or more embodiments.

### DETAILED DESCRIPTION

Hereinafter, example embodiments of the present disclosure will be described in detail. However, it should be understood that the following embodiments are provided by way of example and the present disclosure is not limited thereto and is defined only by the scope of the claims, and equivalents thereof.

As used herein, when an element, such as a layer, a film, a region, a plate, or the like, is referred to as being placed "on" another element, it can be directly placed on the other element, or intervening element(s) may be present, unless the context clearly indicates otherwise.

As used herein, the singular forms "a", "an" and "the" are intended to include the plural forms as well, unless the context clearly indicates otherwise. In addition, unless otherwise stated, when "A or B" is stated, it refers to A, B, or both A and B.

As used herein, "combination thereof" may refer to a mixture, laminate, composite, copolymer, alloy, blend, and reaction product of compositions.

According to one or more embodiments, there is provided an adhesive sheet.

According to one or more embodiments, the adhesive sheet may be used in a semiconductor manufacturing process.

First, the usage of the adhesive sheet in semiconductor manufacturing will be described in more detail.

The adhesive sheet may be used in a semiconductor post-manufacturing process. In some embodiments, the semiconductor post-manufacturing process may include a process in which a silicon wafer is stacked on one surface of the adhesive sheet; a process in which the silicon wafer is subjected to grinding and etching; a high-temperature treatment process (reflow process) in which a solder is formed on the silicon wafer; and a process in which the silicon wafer is removed from the adhesive sheet.

In some embodiments, the adhesive sheet may be removed from the silicon wafer by light irradiation.

In one or more embodiments, a glass plate may be stacked on the other surface of the adhesive sheet (i.e., the surface facing away from the surface on which the silicon wafer is stacked) to improve handling performance of the adhesive sheet and the silicon wafer in the semiconductor post-manufacturing process.

In an embodiment, the glass plate is stacked on the other surface of the adhesive sheet to facilitate handling of the adhesive sheet. In this embodiment, the adhesive sheet may be a double-sided adhesive sheet.

The adhesive sheet includes a first adhesive layer. The first adhesive layer may be removed from the silicon wafer after being attached to the silicon wafer in the semiconductor post-manufacturing process described above.

The first adhesive layer has a high chemical resistance. Accordingly, an etching solution used in an etching process during the semiconductor post-manufacturing process cannot infiltrate the adhesive sheet, thereby improving reliability of the semiconductor post-manufacturing process.

The first adhesive layer has a high initial peel strength with respect to an adherend.

Herein, the adherend may refer to a silicon wafer or stainless steel (SUS) (e.g., a stainless steel substrate). Accordingly, the adhesive sheet can be stably maintained without delamination from the silicon wafer when attached to the silicon wafer during the semiconductor post-manufacturing process.

For example, the first adhesive layer may have an initial peel strength of 100 gf/inch or more, for example, 100 gf/inch to 150 gf/inch, with respect to the adherend. Within this range, the adhesive sheet can be used without delamination from the silicon wafer during the semiconductor post-manufacturing process.

Herein, "peel strength" may be a value measured upon peeling of an adhesive sheet at a peeling angle of 180° and at a peeling speed of 300 mm/min at 25°C using a tensile tester in accordance with JISZ2037.

Herein, "initial peel strength" may be the peel strength of an adhesive sheet including a first adhesive layer measured after the adhesive sheet is attached to an adherend and left at 23°C and 50% RH (relative humidity) for 30 minutes.

The first adhesive layer may not allow significant increase in the peel strength, as compared to the initial peel strength, after the first adhesive layer attached to the adherend is subjected to a high temperature treatment and light irradiation. Accordingly, the adhesive sheet can be (e.g., easily) peeled off of the silicon wafer after high temperature treatment during the semiconductor post-manufacturing process.

Herein, various high temperature treatment conditions may be employed depending on the temperature of high temperature treatment in the semiconductor post-manufacturing process and may include, for example, holding at 230°C for 10 minutes.

The light irradiation may depend on the conditions of a light device (e.g., light source) in the semiconductor post-manufacturing process, but may include, for example, irradiating with UV at an intensity of 2,000 mJ and at a wavelength of 390 nm to 410 nm, for example, at a wavelength of 405 nm.

In this regard, the first adhesive layer has a peel strength ratio of 0.5 or less, as calculated according to Equation 1: $Peel strength ratio = PS 2 / PS 1 ,$ (1)
where PS1 is an initial peel strength (unit: gf/inch) of the first adhesive layer with respect to an adherend, and PS2 is a peel strength (unit: gf/inch) of the first adhesive layer with respect to the adherend after the first adhesive layer attached to the adherend is left at 230°C for 10 minutes and irradiated with UV light.

If the first adhesive layer has a peel strength ratio of greater than 0.5, the first adhesive layer cannot be (e.g., easily) peeled off of the silicon wafer and residues of the first adhesive layer can remain on the silicon wafer, causing failure of the silicon wafer.

In some embodiments, the first adhesive layer may have a peel strength ratio of 0.1 to 0.5, for example, 0.2 to 0.4, as calculated according to Equation 1.

In some embodiments, in Equation 1, the first adhesive layer may have a PS1 value of 100 gf/inch or more, for example, 100 gf/inch to 150 gf/inch. Within these ranges, the semiconductor post-manufacturing process can be performed without delamination from the silicon wafer.

In some embodiments, in Equation 1, the first adhesive layer may have a PS2 value of 50 gf/inch or less, for example, 20 gf/inch to 50 gf/inch, or 20 gf/inch to 45 gf/inch. Within these ranges, the first adhesive layer can be (e.g., easily) removed from the silicon wafer in the semiconductor post-manufacturing process.

The first adhesive layer leaves no residue (i.e., allows no residue of the first adhesive layer) on the adherend when the first adhesive layer is peeled off of the adherend after the adhesive sheet attached to the adherend is subjected to high temperature treatment and light irradiation. Accordingly, the adhesive sheet can secure good reliability of the silicon wafer even after the first adhesive layer is removed from the silicon wafer in the semiconductor post-manufacturing process.

The first adhesive layer may have a haze of 50% or less, for example, 10% to 50%, or 10 to 30%. Within these ranges, the first adhesive layer has suitable miscibility between an oligomer and a binder therein, whereby an adhesive tape having uniform properties can be produced.

Herein, the haze may refer to the total haze measured on the first adhesive layer at a wavelength of 380 nm and 780 nm.

The first adhesive layer may have a thickness of 10 µm to 100 µm, for example, 2 µm to 60 µm. Within these ranges, the first adhesive layer can be used in the semiconductor post-manufacturing process and can (e.g., easily) secure peel strength.

The first adhesive layer includes a (meth)acrylic binder having a (meth)acrylate group on a side chain thereof, a silicone oligomer, and an oligomer having a glass transition temperature of 10°C or higher.

In one or more embodiments, the first adhesive layer may be a cured product of a composition including the (meth)acrylic binder having a (meth)acrylate group on the side chain thereof, the silicone oligomer, and the oligomer having a glass transition temperature of 10°C or higher.

In or more embodiments, the cured product may be a heat cured product.

The first adhesive layer may be prepared by coating the composition to a predetermined thickness on a release film, followed by heat curing the composition. The heat curing process may include heating at 100°C to 150°C for 30 seconds to 10 minutes.

Hereinafter, each component of the composition for the first adhesive layer will be described in more detail.

### Oligomer having a glass transition temperature of 10°C or higher

The oligomer has a glass transition temperature of 10°C or higher. The oligomer serves to improve chemical resistance of the first adhesive layer in the composition for the first adhesive layer, which includes the (meth)acrylic binder having a (meth)acrylate group on the side chain thereof and the silicone oligomer. If the glass transition temperature of the oligomer is less than 10°C, the first adhesive layer formed of the composition comprising the binder and the oligomer may exhibit poor chemical resistance. In some embodiments, the oligomer may have a glass transition temperature of 10°C to 50°C, for example, 10°C to 30°C, or 10°C to 20°C.

Herein, the glass transition temperature (e.g., of the oligomer or the binder) may be measured by any suitable method known to those skilled in the art by differential scanning calorimetry (DSC). For example, a target material is heated to 180°C at a heating rate of 20°C/min, gradually cooled to -100°C, and heated again to 100°C at a heating rate of 10°C/min to obtain an endothermic transition curve. Then, an inflection point of the endothermic transition curve may be determined as the glass transition temperature of the target material.

The oligomer may have a weight average molecular weight of 5,000 g/mol to 100,000 g/mol, for example, 10,000 g/mol to 100,000 g/mol, or 50,000 g/mol to 100,000 g/mol. Within these ranges, the oligomer can (e.g., easily) achieve the above glass transition temperature without affecting peel strength of the first adhesive layer.

As used herein, "weight average molecular weight" can be obtained as a polystyrene equivalent value by gel permeation chromatography.

The oligomer may be present in an amount of less than 20 parts by weight relative to 100 parts by weight of the (meth)acrylic binder. Within this range, the first adhesive layer can achieve a peel strength ratio of 0.5 or less, as calculated according to Equation 1, without increasing the haze thereof. For example, the oligomer may be present in an amount of 1 part by weight to 15 parts by weight, or 5 parts by weight to 15 parts by weight, relative to the 100 parts by weight of the binder. Within these ranges, the first adhesive layer can achieve good chemical resistance, a target initial peel strength, and a peel strength ratio of 0.5 or less, as calculated according to Equation 1.

In one or more embodiments, the oligomer may be a silicone-free oligomer.

The oligomer may include an oligomer of a monomer mixture. The oligomers may be prepared by polymerizing the monomer mixture. The type and content of monomers in the monomer mixture may be adjusted so long as the oligomer has the glass transition temperature within the above range.

The monomer mixture may include a monomer having a homopolymer glass transition temperature of 20°C or higher. With the monomer having a homopolymer glass transition temperature of 20°C or higher, the oligomer can (e.g., easily) reach the glass transition temperature within the above range. For example, the monomer may have a homopolymer glass transition temperature of 20°C to 110°C, for example, 50°C to 100°C.

Herein, "homopolymer glass transition temperature" may refer to a glass transition temperature (Tg) measured with respect to a homopolymer of a target monomer using a DSC Discovery (TA Instruments). For example, the homopolymer of the target monomer is heated to 180°C at a heating rate of 20°C/min, is slowly cooled to -100°C, and is heated again to 100°C at a heating rate of 10°C/min to obtain an endothermic transition curve. Then, an inflection point of the endothermic transition curve may be defined as the homopolymer glass transition temperature of the target monomer.

In one or more embodiments, the monomer having a homopolymer glass transition temperature of 20°C or higher may include a (meth)acrylic acid ester having an alicyclic group at an ester site thereof. Among the monomers having a homopolymer glass transition temperature of 20°C or higher, the (meth)acrylic acid ester having an alicyclic group can improve effectiveness of the first adhesive layer when combined with the (meth)acrylic binder having a (meth)acrylate group on the side chain thereof and the silicone oligomer described in more detail below.

The (meth)acrylic acid ester may be a (meth)acrylic acid ester having a substituted or unsubstituted C₆ to C₂₀ alicyclic group at an ester site thereof. In some embodiments, the (meth)acrylic acid ester may include at least one selected from among isobornyl (meth)acrylate, cyclohexyl (meth)acrylate, dicyclopentenyl (meth)acrylate, dicyclopentanyl (meth)acrylate, and bornyl (meth)acrylate. For example, the (meth)acrylic acid ester may include at least one selected from among isobornyl (meth)acrylate, cyclohexyl (meth)acrylate, and dicyclopentenyl (meth)acrylate.

Herein, the term "substituted" in the expression "substituted or unsubstituted" refers to that at least one hydrogen atom of the corresponding functional group is substituted with a C₁ to C₅ alkyl group, a C₁ to C₁₀ cycloalkyl group, a C₆ to C₁₀ aryl group, an amine group, a hydroxyl group, a cyano group, or a halogen.

The (meth)acrylic acid ester may be present in an amount of 30 mol% or more in the monomer mixture based on a total 100 mol% of all monomers in the monomer mixture for the oligomer. Within this range, the oligomer can (e.g., easily) reach the glass transition temperature thereof.

The (meth)acrylic acid ester may be present in an amount of 30 mol% to 80 mol%, for example, 40 mol% to 80 mol%, or 40 mol% to 60 mol%. Within these ranges, the (meth)acrylic acid ester can provide the glass transition temperature of the oligomer and can (e.g., easily) secure initial adhesion of the first adhesive layer.

The monomer mixture may further include a co-monomer polymerizable with the (meth)acrylic acid ester.

The co-monomer may include a (meth)acrylic acid ester having an alkyl group at an ester site thereof and a (meth)acrylic acid esters having an alkyl group substituted with at least one hydroxyl group at an ester site thereof.

The (meth)acrylic acid ester having an alkyl group at the ester site thereof may be a (meth)acrylic acid ester having an unsubstituted straight or branched C₁ to C₂₀ alkyl group at the ester site thereof. In some embodiments, the (meth)acrylic acid ester may include methyl (meth)acrylate, ethyl (meth)acrylate, propyl (meth)acrylate, n-butyl (meth)acrylate, t-butyl (meth)acrylate, iso-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, decyl (meth)acrylate, and lauryl (meth)acrylate.

In one or more embodiments, the (meth)acrylic acid ester may have a homopolymer glass transition temperature of -60°C or less, for example, -80°C to - 60°C. Within these ranges, the oligomer can (e.g., easily) achieve the above glass transition temperature without affecting properties of the first adhesive layer. In some embodiments, the (meth)acrylic acid ester may include at least one of 2-ethylhexyl acrylate or n-butyl acrylate.

The (meth)acrylic acid ester may be present in an amount of 5 mol% to 30 mol%, for example, 5 mol% to 25 mol%, or 10 mol% to 25 mol%, in the monomer mixture based on a total 100 mol% of all monomers in the monomer mixture. Within these ranges, the (meth)acrylic acid ester can provide the glass transition temperature of the oligomer and can (e.g., easily) secure initial adhesion of the first adhesive layer.

The (meth)acrylic acid ester having an alkyl group substituted with at least one hydroxyl group at the ester site thereof may be a (meth)acrylic acid ester having a C₁ to C₁₀ alkyl group substituted with at least one hydroxyl group at the ester site thereof. In some embodiments, the (meth)acrylic acid ester may include at least one selected from among 2-hydroxyethyl (meth)acrylate, 3-hydroxypropyl (meth)acrylate, 4-hydroxybutyl (meth)acrylate, hydroxyhexyl (meth)acrylate, and 1-chloro-2-hydroxypropyl (meth)acrylate.

In one or more embodiments, the (meth)acrylic acid ester may have a homopolymer glass transition temperature of 50°C or higher, for example, 50°C to 100°C. Within these ranges, the (meth)acrylic acid ester can provide the glass transition temperature of the oligomer without affecting the properties of the first adhesive layer. For example, the (meth)acrylic acid ester may be 2-hydroxyethyl methacrylate.

The (meth)acrylic acid ester may be present in an amount of 5 mol% to 50 mol%, for example, 5 mol% to 40 mol%, or 10 mol% to 40 mol%, in the monomer mixture based on a total 100 mol% of all monomers in the monomer mixture. Within these ranges, the (meth)acrylic acid ester can provide the glass transition temperature of the oligomer and can (e.g., easily) secure initial adhesion of the first adhesive layer.

In one or more embodiments, the (meth)acrylic acid ester having a substituted or unsubstituted C₆ to C₂₀ alicyclic group at the ester site, the (meth)acrylic acid ester having an alkyl group at the ester site, and the (meth)acrylic acid ester having an alkyl group substituted with at least one hydroxyl group at the ester site may be present in a total amount of 95 mol% or more, for example, 95 mol% to 100 mol%, or 100 mol%, in the monomer mixture based on a total 100 mol% of all monomers in the monomer mixture.

The oligomer may be prepared by polymerizing the monomer mixture through a typical polymerization method. The polymerization method may include any suitable method known to those skilled in the art. For example, the oligomer may be prepared by adding an initiator to the monomer mixture, followed by typical copolymerization, such as suspension polymerization, emulsion polymerization, solution polymerization, and/or the like. Polymerization may be performed at a temperature of 60°C to 70°C for 4 hours to 8 hours. The initiator may be selected from any suitable initiators, including azo-based polymerization initiators and/or peroxides, such as benzoyl peroxide or acetyl peroxide.

### (Meth)acrylic binder having (meth)acrylate group on side chain

The binder has a (meth)acrylate group on a side chain thereof. Accordingly, the binder can be further cured upon light irradiation as described in the semiconductor post-manufacturing process, thereby improving chemical resistance of the first adhesive layer with respect to a silicon wafer.

In one or more embodiments, the binder may include a unit represented by Formula 1: 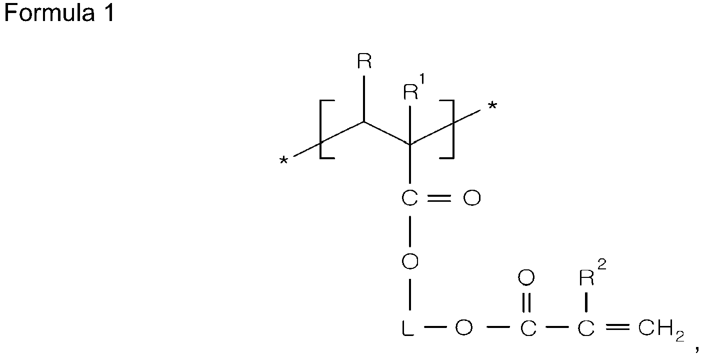 where * is a linking site of an element, R, R¹, and R² are each independently hydrogen or a methyl group, and L is a bivalent organic group.

In Formula 1, L may be a substituted or unsubstituted C₁ to C₁₀ alkylene group, a substituted or unsubstituted C₆ to C₂₀ arylene group, or a combination thereof. In Formula 1, L may further include an amide group or an ester group.

In one or more embodiments, the binder may include a unit represented by Formula 1-1: 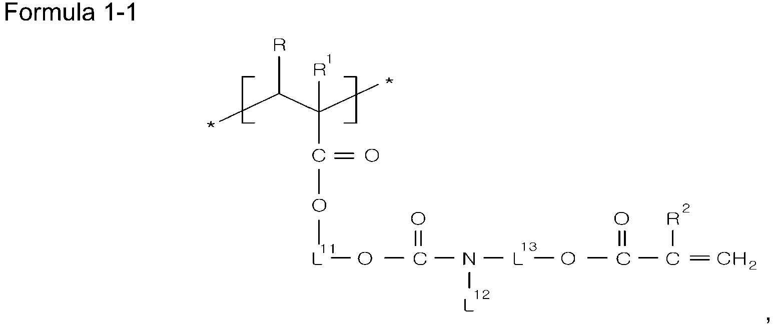
where * is a linking site of an element,
R, R¹, and R² are each independently hydrogen or a methyl group,
L¹² is hydrogen or a substituted or unsubstituted C₁ to C₅ alkyl group, and
L¹¹ and L¹³ are each independently a substituted or unsubstituted C₁ to C₁₀ alkylene group.

In some embodiments, in Formula 1-1, L¹¹ and L¹³ may be each independently a substituted or unsubstituted C₁ to C₅ alkylene group.

The binder may have a higher weight average molecular weight than the oligomer. In some embodiments, the binder may have a weight average molecular weight of 300,000 g/mol or more, for example, 300,000 g/mol to 1,000,000 g/mol, or 300,000 g/mol to 800,000 g/mol. Within these ranges, the adhesive layer can (e.g., easily) achieve target initial peel strength.

The binder may have a glass transition temperature of -10°C or less, for example, -80°C to -10°C, -60°C to -10°C, or -50°C to -40°C. Within these ranges, the adhesive layer can be suitably bonded to a silicon wafer.

The binder may include a unit derived from a (meth)acrylic acid ester having an alkyl group at an ester site thereof and a unit derived from a (meth)acrylic acid ester having an alkyl group substituted with at least one hydroxyl group at an ester site thereof.

In one or more embodiments, the binder may include a polymer of a monomer mixture.

The binder may include a polymer of a monomer mixture including a monomer having a (meth)acrylate group on a side chain thereof. The monomer having a (meth)acrylate group on the side chain thereof may include at least one compound represented by Formula 2: 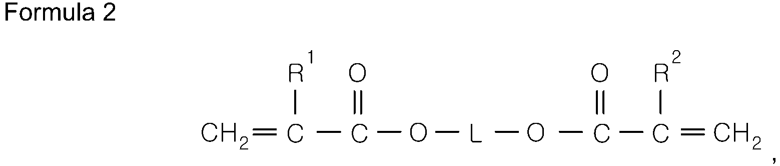 where R¹, R², and L are the same as those defined in Formula 1.

In Formula 2, L may be a substituted or unsubstituted C₁ to C₁₀ alkylene group or a substituted or unsubstituted C₆ to C₂₀ arylene group. In Formula 2, L may further include an amide group or an ester group.

In one or more embodiments, the monomer having a (meth)acrylate group on the side chain thereof may include at least one compound represented by Formula 2-1: 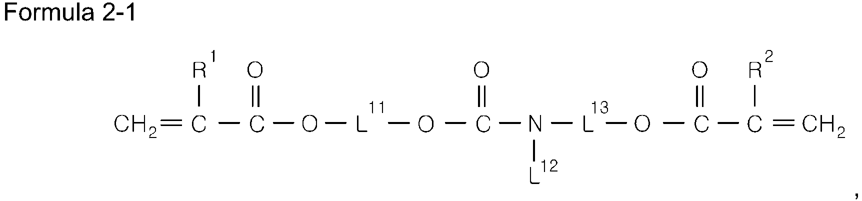 where R¹, R², L¹¹, L¹², and L¹³ are the same as defined in Formula 1-1.

For example, in Formula 2-1, L¹¹ and L¹³ may be each independently a substituted or unsubstituted C₁ to C₅ alkylene group.

In one or more embodiments, the binder may include a reaction product of a prepolymer and the monomer having a (meth)acrylate group on the side chain thereof. That is, the binder may include a reaction product obtained by preparing the prepolymer, followed by reacting the prepolymer with the monomer having a (meth)acrylate group on the side chain thereof. This process can ensure that there are no side reactions upon polymerization. For example, the monomer having a (meth)acrylate group on the side chain thereof may be 2-isocyanatoethyl (meth)acrylate.

In an embodiment, the prepolymer may be a prepolymer of a monomer mixture including a (meth)acrylic acid ester having an alkyl group at an ester site thereof and a (meth)acrylic acid ester having an alkyl group substituted with at least one hydroxyl group at an ester site thereof.

The (meth)acrylic acid ester having an alkyl group at the ester site thereof may be a (meth)acrylic acid ester having an unsubstituted straight or branched C₁ to C₂₀ alkyl group at the ester site thereof. Details of the (meth)acrylic acid ester are the same as those described above. For example, the (meth)acrylic acid ester may include at least one selected from among 2-ethylhexyl acrylate and 2-ethylhexyl methacrylate.

The (meth)acrylic acid ester having an alkyl group at the ester site thereof for the prepolymer may be present in an amount of 60 mol% to 90 mol%, for example, 60 mol% to 80 mol%, or 70 mol% to 80 mol%, in the monomer mixture based on a total 100 mol% of all monomers in the monomer mixture for the prepolymer. Within these ranges, the composition can (e.g., easily) form the first adhesive layer.

The (meth)acrylic acid ester having an alkyl group substituted with at least one hydroxyl group at an ester site thereof may be a (meth)acrylic acid ester having a C₁ to C₁₀ alkyl group substituted with at least one hydroxyl group at the ester site. Details of the (meth)acrylic acid esters are the same as those described above. For example, the (meth)acrylic acid ester may include at least one of 4-hydroxybutyl acrylate or 4-hydroxybutyl methacrylate.

The (meth)acrylic acid ester having an alkyl group substituted with at least one hydroxyl group at an ester site thereof for the prepolymer may be present in an amount of 10 mol% to 40 mol%, for example, 20 mol% to 40 mol%, or 20 mol% to 30 mol%, in the monomer mixture based on a total 100 mol% of all monomers in the monomer mixture for the prepolymer. Within these ranges, the (meth)acrylic acid ester can provide initial adhesion of the first adhesive layer and reaction sites with the monomer having a (meth)acrylate group on the side chain thereof.

In one or more embodiments, the (meth)acrylic acid ester having an alkyl group at the ester site thereof and the (meth)acrylic acid ester having an alkyl group substituted with at least one hydroxyl group at the ester site thereof may be present in a total amount of 95 mol% or more, for example, 95 mol% to 100 mol%, 100 mol%, in the monomer mixture based on a total 100 mol% of all monomers in the monomer mixture for the prepolymer.

The monomer having a (meth)acrylate group on the side chain thereof may be a monomer having a functional group capable of reacting with the hydroxyl group. For example, the monomer may be 2-isocyanatoethyl (meth)acrylate.

In one or more embodiments, the monomer having a (meth)acrylate group on the side chain thereof may be present in an amount of 1 part by weight to 10 parts by weight, for example, 1 part by weight to 5 parts by weight, relative to 100 parts by weight of the monomer mixture based on a total 100 mol% of all monomers in the monomer mixture for the prepolymer. Within these ranges, the effects of the first adhesive layer can be (e.g., easily) achieved.

### Silicone oligomer

The silicone oligomer includes silicone to suppress an increase in peel strength of the first adhesive layer after high temperature treatment in the semiconductor post-manufacturing process.

In one or more embodiments, the silicone oligomer may have a (meth)acrylate group on a side chain thereof. Accordingly, the (meth)acrylate group on the side chain thereof can be further cured upon light irradiation in the semiconductor post-manufacturing process, thereby reducing peel strength with respect to the silicon wafer.

The silicone oligomer may have a weight average molecular weight of 200,000 g/mol or less, for example, 10,000 g/mol to 200,000 g/mol, or 10,000 g/mol to 100,000 g/mol.

The silicone oligomer may include a polymer of a monomer mixture.

The monomer mixture may include a silicone-containing (meth)acrylate. The silicone-containing (meth)acrylate may include at least one compound represented by Formula 3: 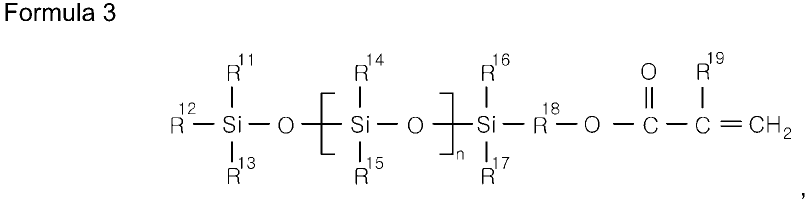
where R¹¹, R¹², R¹³, R¹⁴, R¹⁵, R¹⁶, and R¹⁷ are each independently a substituted or unsubstituted C₁ to C₁₀ alkyl group, a substituted or unsubstituted C₂ to C₁₀ alkenyl group, a substituted or unsubstituted C₂ to C₁₀ alkynyl group, a substituted or unsubstituted C₆ to C₁₀ aryl group, or a substituted or unsubstituted C₅ to C₁₀ cycloalkyl group;
R¹⁸ is a substituted or unsubstituted C₁ to C₁₀ alkylene group;
R¹⁹ is hydrogen or a methyl group; and
n is an integer of 1 or more.

The silicone-containing (meth)acrylate may be prepared by a suitable method known to those skilled in the art or may be a commercially available product.

The silicone-containing (meth)acrylate may be present in an amount of 0.01 mol% to 30 mol%, for example, 0.1 mol% to 20 mol%, 0.1 mol% to 10 mol%, or 0.1 mol% to 5 mol% based on a total 100 mol% of all monomers in the monomer mixture for the silicone oligomer. Within these ranges, the composition for the first adhesive layer can secure peel strength of the first adhesive layer while suppressing the increase in peel strength in a high temperature process.

The monomer mixture may further include a (meth)acrylic acid ester having an alkyl group at an ester site thereof and a (meth)acrylic acid ester having an alkyl group substituted with at least one hydroxyl group at an ester site thereof.

The (meth)acrylic acid ester having an alkyl group at the ester site thereof may be a (meth)acrylic acid ester having an unsubstituted straight or branched C₁ to C₂₀ alkyl group at the ester site thereof. Details of the (meth)acrylic acid ester are the same as those described above. For example, the (meth)acrylic acid ester may include at least one selected from among 2-ethylhexyl acrylate, 2-ethylhexyl methacrylate, and 2-ethylhexyl methacrylate.

The (meth)acrylic acid ester may be present in an amount of 80 mol% to 99 mol%, for example, 85 mol% to 99 mol%, or 80 mol% to 95 mol%, in the monomer mixture based on a total 100 mol% of all monomers in the monomer mixture. Within these ranges, the composition for the first adhesive layer can (e.g., easily) form the first adhesive layer.

The (meth)acrylic acid ester having an alkyl group substituted with at least one hydroxyl group at the ester site may be a (meth)acrylic acid ester having a C₁ to C₁₀ alkyl group substituted with at least one hydroxyl group at the ester site. Details of the (meth)acrylic acid ester are the same as those described above. For example, the (meth)acrylic acid ester may include at least one of 4-hydroxybutyl acrylate or 4-hydroxybutyl methacrylate.

The (meth)acrylic acid ester may be present in an amount of 0.1 mol% to 40 mol%, 0.1 mol% to 10 mol%, or 0.1 mol% to 5 mol% based on a total 100 mol% of all monomers in the monomer mixture. Within these ranges, the (meth)acrylic acid ester can provide initial adhesion of the first adhesive layer and reaction sites with the monomer having a (meth)acrylate group on the side chain thereof.

In one or more embodiments, the oligomer may be prepared by polymerizing the monomer mixture.

In one or more embodiments, the silicone oligomer may be a reaction product of the oligomer of the monomer mixture and the monomer having a (meth)acrylate group on the side chain thereof. That is, the silicone oligomer may be prepared by preparing the oligomer of the monomer mixture and reacting the oligomer with the monomer having a (meth)acrylate group on the side chain thereof.

The monomer having a (meth)acrylate group on the side chain may be a monomer having a functional group capable of reacting with a hydroxyl group. For example, the monomer may be 2-isocyanatoethyl (meth)acrylate.

In one or more embodiments, the monomer having a (meth)acrylate group on the side chain may be present in an amount of 1 part by weight to 10 parts by weight, for example, 1 part by weight to 5 parts by weight, relative to 100 parts by weight of the monomer mixture for the oligomer. Within these ranges, the effects of the first adhesive layer can be (e.g., easily) achieved.

The silicone oligomer may be present in an amount of 0.01 parts by weight to 10 parts by weight, for example, 0.01 parts by weight to 5 parts by weight, 0.1 parts by weight to 5 parts by weight, or 0.5 parts by weight to 3 parts by weight, relative to 100 parts by weight of the (meth)acrylic binder. Within these ranges, the composition for the first adhesive layer can prevent or suppress an increase in peel strength of the first adhesive layer.

The composition for the first adhesive layer may further include a heat curing agent and a photoinitiator.

### Heat curing agent

The heat curing agent can assist in heat curing of the (meth)acrylic binder, the oligomer having a glass transition temperature of 10°C and the silicone oligomer to form a matrix of the first adhesive layer and to provide the initial peel strength of the first adhesive layer.

The heat curing agent may include at least one selected from among an isocyanate curing agent, a metal chelate curing agent, a carbodiimide curing agent, an aziridine curing agent, and an epoxy curing agent. In some embodiments, the heat curing agent is an isocyanate curing agent.

The isocyanate curing agent may include a bi- or higher functional isocyanate curing agent, for example, a bi- to hexafunctional isocyanate curing agent. In one or more embodiments, the isocyanate curing agent may include at least one selected from among xylene diisocyanate including m-xylene diisocyanate and the like, methylene bis(phenylisocyanate) including 4,4'-methylene bis(phenylisocyanate) and the like, naphthalene diisocyanate, tolylene diisocyanate, hexamethylene diisocyanate, and isophorone diisocyanate, or adducts thereof. For example, the adducts may include a trimethylolpropane adduct of tolylene diisocyanate, a trimethylolpropane adduct of hexamethylene diisocyanate, a trimethylolpropane adduct of isophorone diisocyanate, a trimethylolpropane adduct of xylene diisocyanate, isocyanurate of tolylene diisocyanate, isocyanurate of hexamethylene diisocyanate, and/or isocyanurate of isophorone diisocyanate. The composition may include at least one of these isocyanate curing agents.

The heat curing agent may be present in an amount of greater than 0 parts by weight to 3 parts by weight, for example, 0.001 parts by weight to 3 parts by weight, or 0.01 parts by weight to 2 parts by weight, relative to 100 parts by weight of the (meth)acrylic binder. Within these ranges, the first adhesive layer can achieve improvement in reliability.

### Photoinitiator

The photoinitiator serves to cure the (meth)acrylic binder upon light irradiation during the semiconductor post-manufacturing process described above to reduce peel strength of the first adhesive layer through physical change of the first adhesive layer by a light device (e.g., light source).

The photoinitiator may include at least one of a photo-radical initiator or a cationic photoinitiator.

In one or more embodiments, the photoinitiator may include a photoinitiator having a maximum absorption wavelength within the range of irradiation wavelengths applied during light irradiation. For example, the photoinitiator may have a maximum absorption wavelength in the range of 280 nm to 430 nm. Within this range, the photocuring effect of the binder can be obtained by light irradiation. In some embodiments, the photoinitiator may include a phosphorus initiator, a ketone initiator, and/or the like, without being limited thereto.

The photoinitiator may be present in an amount of greater than 0 parts by weight to 3 parts by weight, for example, 0.05 parts by weight to 3 parts by weight or 0.1 parts by weight to 3 parts by weight, relative to 100 parts by weight of the (meth)acrylic binder. Within these ranges, the composition for the first adhesive layer can secure uniform curing of the (meth)acrylic binder through light irradiation and can prevent or suppress deterioration in transparency of the first adhesive layer due to residual initiator.

The composition for the first adhesive layer may further include typical additives used in adhesive layers. For example, the additives may include surfactants, heat stabilizers, light stabilizers, pigments, dispersants, and/or the like, without being limited thereto.

The adhesive sheet may further include a base film for supporting the first adhesive layer on a first surface of the first adhesive layer.

The base film may support the first adhesive layer.

The base film may include an optically transparent resin film. For example, the base film may be a polyester resin film selected from among polyethylene naphthalate (PEN), polyethylene terephthalate (PET), polybutylene naphthalate (PBN), and polybutylene terephthalate (PBT). For example, the base film may be a PEN film.

The base film may have a thinner thickness than the first adhesive layer. In some embodiments, the base film may have a thickness of 5 µm to 100 µm, for example, 5 µm to 80 µm, or 5 µm to 50 µm. Within these ranges, the base film can be suitably used in the adhesive sheet.

The adhesive sheet may further include a first release film on a second surface of the first adhesive layer to protect the first adhesive layer. The second surface is opposite to the first surface (e.g., on which the base film is attached).

The first release film may protect the first adhesive layer from foreign substances.

The first release film may include an optically transparent resin film. For example, the first release film may be a polyester resin film as described above.

The first release film may include at least one of a silicone coating layer or a fluorine coating layer on a surface thereof to facilitate release from the first adhesive layer.

The adhesive sheet may further include a second adhesive layer on the first surface of the first adhesive layer. In some embodiments, the second adhesive layer and the first adhesive layer are spaced apart by the base film. In some embodiments, the second adhesive layer is directly on the first surface of the first adhesive layer.

The second adhesive layer is not attached to the silicon wafer in the post-semiconductor manufacturing process. Instead, the second adhesive layer may be attached to a glass plate in the semiconductor post-manufacturing process to facilitate handling of the silicon wafer and the adhesive sheet.

The second adhesive layer may include a heat cured product of a composition including the (meth)acrylic binder having a (meth)acrylate group on the side chain thereof, the silicone oligomer, the heat curing agent, and the photoinitiator.

The composition may further include an oligomer having a glass transition temperature of 10°C or higher.

The composition may further include a photocurable polyfunctional (meth)acrylate. The polyfunctional (meth)acrylate may include a bi- or higher functional (meth)acrylate, for example, a bifunctional to hexafunctional (meth)acrylate.

The adhesive sheet for semiconductor manufacturing may further include a second release film on the other surface of the second adhesive layer. The second release film may be substantially the same as the first release film.

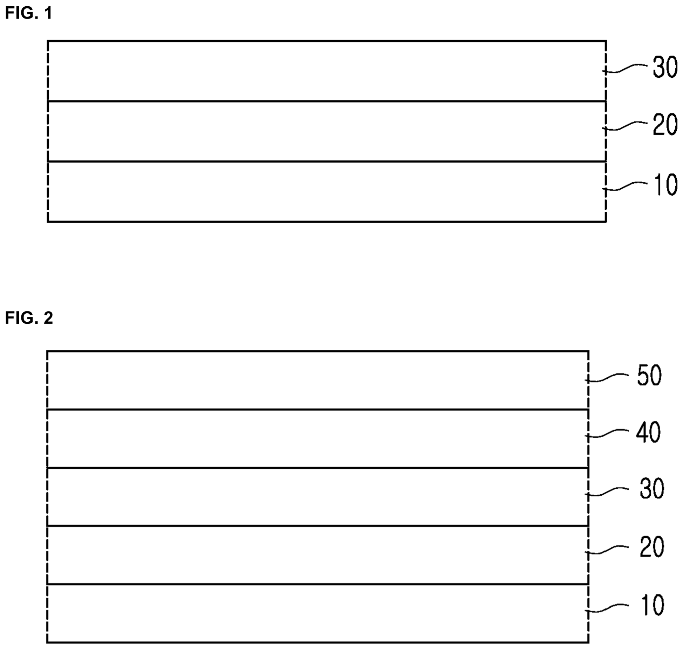

FIG. 1 and FIG. 2 are cross-sectional views of adhesive sheets for semiconductor manufacturing according to embodiments.

Referring to FIG. 1, the adhesive sheet may include a first release film 10, a first adhesive layer 20, and a base film 30, which are stacked in sequence.

Referring to FIG. 2, the adhesive sheet may include a first release film 10, a first adhesive layer 20, a base film 30, a second adhesive layer 40, and a second release film 50, which are stacked in sequence.

Next, the present disclosure will be described in more detail with reference to some examples. However, it should be noted that these examples are provided for illustration only and are not to be construed in any way as limiting the disclosure.

### Example 1

### (1) Preparation of (meth)acrylic binder having (meth)acrylate group on side chain thereof

Ethyl acetate was placed in a 1 L reactor provided with a cooling device for temperature control under a nitrogen atmosphere. 100 parts by weight of a monomer mixture including 75 mol% of 2-ethylhexyl acrylate and 25 mol% of 4-hydroxybutyl acrylate was added to the reactor. The reactor was purged with nitrogen for 1 hour so as to remove oxygen, followed by maintaining the inner temperature of the reactor at 62°C. After uniformly stirring the monomer mixture, 0.07 parts by weight of azobisisobutyronitrile (AIBN) was added as an initiator and reacted with the monomer mixture for 8 hours. 30 wt% of a (meth)acrylic copolymer solution was prepared by adding ethyl acetate to the resulting mixture. 4.5 parts by weight of 2-isocyanatoethyl methacrylate was reacted with 100 parts by weight of a solid resin of the prepared (meth)acrylic copolymer solution, thereby preparing a (meth)acrylic binder having a (meth)acrylate group on the side chain thereof (weight average molecular weight: 500,000 g/mol).

### (2) Preparation of silicone oligomer

Ethyl acetate was placed in a 1 L reactor provided with a cooling device for temperature control under a nitrogen atmosphere. 100 parts by weight of a monomer mixture including 95 mol% of 2-ethylhexyl acrylate, 4.5 mol% of 4-hydroxybutyl acrylate and 0.5 mol% of silicone acrylate (KF-2012, Shin-Etsu Chemical Co., Ltd.) was added to the reactor. The reactor was purged with nitrogen for 30 minutes so as to remove oxygen, followed by maintaining the inner temperature of the reactor at 62°C. After uniformly stirring the monomer mixture, 0.07 parts by weight of AIBN was added as an initiator and reacted with the monomer mixture for 8 hours. 30 wt% of a silicone pre-oligomer solution was prepared by adding ethyl acetate to the resulting mixture. 2 parts by weight of 2-isocyanatoethyl methacrylate was reacted with 100 parts by weight of a solid resin of the prepared silicone pre-oligomer solution, thereby preparing a silicone oligomer having a (meth)acrylate group on the side chain thereof (weight average molecular weight: 80,000 g/mol).

### (3) Preparation of oligomer having a glass transition temperature of 10°C or higher

Preparative example 1 was accomplished (e.g., carried out) to prepare the oligomer. Ethyl acetate was placed in a 1 L reactor provided with a cooling device for temperature control under a nitrogen atmosphere. 100 parts by weight of a monomer mixture including 20 mol% of 2-ethylhexyl acrylate, 50 mol% of isobornyl acrylate (IBXA), and 30 mol% of 2-hydroxyethyl methacrylate (2-HEMA) was added to the reactor. Nitrogen was supplied to the reactor for 30 minutes so as to remove oxygen, followed by maintaining the reactor at 62°C. After uniformly stirring the monomer mixture, 0.07 parts by weight of AIBN was added as an initiator to the reactor and reacted with the monomer mixture for 8 hours, thereby preparing an oligomer having a high glass transition temperature. The oligomer had a weight average molecular weight of 80,000 g/mol, as measured by GPC, and a glass transition temperature of 15°C.

### (4) Preparation of composition for first adhesive layer and formation of first adhesive layer

A composition for the first adhesive layer was prepared by mixing 100 parts by weight of the (meth)acrylic binder prepared in (1), 1 part by weight of the silicone oligomer prepared in (2), 10 parts by weight of the oligomer prepared in (3), 1 part by weight of an isocyanate curing agent (TD-75) as a heat curing agent, and 0.5 parts by weight of TPO as a photoinitiator in terms of solid content.

The composition for the first adhesive layer was applied to one surface of a polyethylene naphthalate (PEN) film (Q8300, thickness: 25 µm, Toyobo Co., Ltd.) subjected to corona treatment using an applicator. Thereafter, the PEN film having the composition for the first adhesive layer coated thereon was dried in an oven at 110°C for 4 minutes, followed by attaching a release film (PEN film) on the adhesive layer, thereby preparing a laminate of the PEN film, the first adhesive layer (thickness: 40 µm) and the first release film.

### Examples 2 and 3

Adhesive sheets were prepared in the same manner as in Example 1 except that an oligomer prepared by polymerizing a monomer mixture of Table 1 in the preparative examples 2 and 3 was used instead of the oligomer of the preparative example 1 of Example 1.

### Comparative Example 1

An adhesive sheet was prepared in the same manner as in Example 1 except that the oligomer of the preparative example 1 of the Example 1 was not used.

### Comparative Example 2

An adhesive sheet was prepared in the same manner as in Example 1 except that the oligomer of the preparative example 1 of the Example 1 was present in an amount of 20 parts by weight relative to 100 parts by weight of the (meth)acrylic binder.

### Comparative Example 3

An adhesive sheet was prepared in the same manner as in Example 1 except that an oligomer prepared by polymerizing a monomer mixture of Table 1 in the preparative example 4 was used instead of the oligomer of the preparative example 1 of the Example 1.

The following properties were evaluated on the adhesive sheets prepared in Examples and Comparative Examples.

### (1) Chemical resistance

With the release film removed from the adhesive sheet prepared in each of Examples and Comparative Examples, the adhesive sheet was attached to a 4" silicon wafer through the adhesive layer using a mounter, and was sequentially dipped in solutions under Conditions 1) and 2). Diluent infiltration between the 4" silicon wafer and the adhesive layer or lifting of the first adhesive layer was checked with the naked eye.
Condition 1) 10 minutes in 1% aqueous diluent of KOH (solvent: water) at 50°C
Condition 2) 10 minutes in a 35% aqueous diluent of H₂O₂ (solvent: water) at 50°C

### (2) Initial peel strength (unit: gf/inch)

The adhesive sheet of each of Examples and Comparative Examples was cut to a size of 25 mm x 200 mm in width x length. The first release film was peeled off of the adhesive sheet at 23°C and 50% RH to expose the first adhesive layer. The exposed first adhesive layer was pressed onto a silicon wafer using a 2 kg roller to prepare a specimen. Thereafter, the specimen was left at 23°C and 50% RH for 30 minutes. Peel strength was measured upon peeling the first adhesive layer off of the silicon wafer using a tensile tester (Texture Analyzer, TA Industry) at 25°C under conditions of a peeling speed of 300 mm/min and a peeling angle of 180° in accordance with JISZ2037.

### (3) Peel strength (unit: gf/inch) after high temperature treatment and UV irradiation

Specimens were prepared in the same manner as in (2). Each of the specimens was placed in an oven at 230°C for 10 minutes, then left at 23°C and 50% RH for 30 minutes, and subsequently irradiated with UV light at 2,000 mJ through a UV exposer (at a wavelength of 405 nm). Thereafter, peel strength was measured upon peeling the adhesive layer off of the silicon wafer using a tensile tester (Texture Analyzer, TA Industry) at 25°C under conditions of a peeling speed of 300 mm/min and a peeling angle of 180° in accordance with JISZ2037.

**Table 1**

| | | Preparative Example 1 | Preparative Example 2 | Preparative Example 3 | Preparative Example 4 |
|---|---|---|---|---|---|
| Monomer | 2-EHA | 20 | 20 | 20 | 20 |
| | 2-HEMA | 30 | 30 | 30 | 30 |
| | IBXA | 50 | 0 | 0 | 0 |
| | CHA | 0 | 50 | 0 | 0 |
| | DCPA | 0 | 0 | 50 | 0 |
| | MA | 0 | 0 | 0 | 50 |
| Oligomer | Mw | 80,000 | 80,000 | 80,000 | 80,000 |
| | Tg | 15 | 10 | 18 | -35 |

| | | | | | |
|---|---|---|---|---|---|
| *In Table 1, CHA (cyclohexyl acrylate), DCPA (dicyclopentanyl acrylate), MA (methyl acrylate) | | | | | |

**Table 2**

| | | Example 1 | Example 2 | Example 3 | Comparative Example 1 | Comparative Example 2 | Comparative Example 3 |
|---|---|---|---|---|---|---|---|
| Binder | | 100 | 100 | 100 | 100 | 100 | 100 |
| Silicon oligomer | | 1 | 1 | 1 | 1 | 1 | 1 |
| Oligomer | Preparative Example 1 | 10 | 0 | 0 | 0 | 20 | 0 |
| | Preparative Example 2 | 0 | 10 | 0 | 0 | 0 | 0 |
| | Preparative Example 3 | 0 | 0 | 10 | 0 | 0 | 0 |
| | Preparative Example 4 | 0 | 0 | 0 | 0 | 0 | 10 |
| Heat curing agent | | 1 | 1 | 1 | 1 | 1 | 1 |
| Photoinitiator | | 0.5 | 0.5 | 0.5 | 0.5 | 0.5 | 0.5 |
| Chemical resistance | | Good | Good | Good | Poor (liquid infiltration) | Good | Poor (Liquid Infiltration) |
| Initial peel strength | | 105 | 115 | 118 | 51 | 125 | 68 |
| Peel strength after high temperature and UV irradiation | | 35 | 36 | 34 | 32 | 64 | 31 |
| Peel strength ratio | | 0.33 | 0.31 | 0.29 | 0.63 | 0.51 | 0.46 |

As shown in Table 2, the adhesive sheets of Examples each had high chemical resistance, high initial adhesion with respect to a silicon wafer, and a low peel strength increase rate relative to initial peel strength after the adhesive sheets attached to the silicon wafer were subjected to high temperature treatment and light irradiation. Furthermore, the adhesive sheets of Examples had no residue of the adhesive layer when peeled off of the silicon wafer after the adhesive sheets attached to the silicon wafer were subjected to high temperature treatment and light irradiation.

However, as shown in Table 2, the adhesive sheets of Comparative Examples had poor chemical resistance or a high peel strength ratio after high temperature treatment and UV irradiation. The adhesive sheet of Comparative Example 1 prepared without using an oligomer having a glass transition temperature of 10°C or higher had poor chemical resistance and a high peel strength increase rate. The adhesive sheet of Comparative Example 2 prepared using an excess of the oligomer having a glass transition temperature of 10°C or higher had a high peel strength increase rate. The adhesive sheet of Comparative Example 3 prepared using an oligomer having a glass transition temperature of -35°C instead of the oligomer having a glass transition temperature of 10°C or higher had low initial peel strength and poor chemical resistance.

It will be understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof. As used herein, the term "combination thereof" refers to a mixture, a laminate, a composite, a copolymer, an alloy, a blend, a reaction product, and/or the like of the constituents.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

It should be understood that various modifications, changes, alterations, and equivalent embodiments may be made by those skilled in the art without departing from the spirit and scope of the disclosure. Accordingly, the modified or transformed embodiments as such may not be understood separately from the technical ideas and aspects of the present disclosure, and the modified embodiments are within the scope of the claims of the present disclosure, and equivalents thereof.

## Claims

1. An adhesive sheet comprising a first adhesive layer (20), the first adhesive layer (20) comprising:
a (meth)acrylic binder, the (meth)acrylic binder having a (meth)acrylate group on a side chain thereof,
a silicone oligomer, and
an oligomer, the oligomer having a glass transition temperature of 10°C or higher,
wherein the first adhesive layer (20) has a peel strength ratio of 0.5 or less, as calculated according to Equation 1: $peel strength ratio = PS 2 / PS 1 ,$ (1)
where PS1 is an initial peel strength in unit of gf/inch of the first adhesive layer (20) with respect to an adherend, and
PS2 is a peel strength in unit of gf/inch of the first adhesive layer (20) with respect to the adherend after the first adhesive layer (20) attached to the adherend is left at 230°C for 10 minutes and irradiated with UV light.

2. The adhesive sheet as claimed in claim 1, wherein the first adhesive layer (20) has a PS1 value of 100 gf/inch or more and a PS2 value of 50 gf/inch or less and/or a haze of 50% or less.

3. The adhesive sheet as claimed in claim 1 or 2, wherein the oligomer is present in an amount of less than 20 parts by weight relative to 100 parts by weight of the (meth)acrylic binder.

4. The adhesive sheet as claimed in any of the claims 1 to 3, wherein the oligomer comprises an oligomer of a monomer mixture, the monomer mixture comprising a first monomer having a homopolymer glass transition temperature of 20°C or higher, especially wherein the first monomer comprises a (meth)acrylic acid ester having an alicyclic group at an ester site thereof, preferably wherein the (meth)acrylic acid ester having an alicyclic group at the ester site thereof comprises at least one selected from among isobornyl (meth)acrylate, cyclohexyl (meth)acrylate, dicyclopentanyl (meth)acrylate, and bornyl (meth)acrylate.

5. The adhesive sheet as claimed in any of the claims 1 to 4, wherein the first monomer is present in an amount of 30 mol% or more in the monomer mixture based on a total 100 mol% of all monomers in the monomer mixture.

6. The adhesive sheet as claimed in any of the claims 1 to 4, wherein the monomer mixture further comprises a (meth)acrylic acid ester having an alkyl group at an ester site thereof and a (meth)acrylic acid ester having an alkyl group substituted with at least one hydroxyl group at an ester site thereof.

7. The adhesive sheet as claimed in any of the claims 1 to 6, wherein the (meth)acrylic binder comprises a unit represented by Formula 1-1: 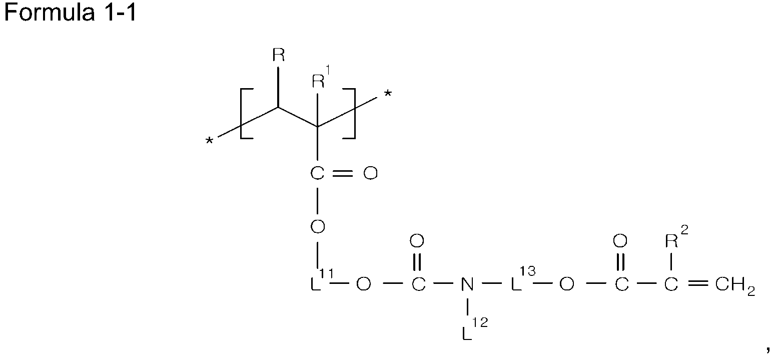
wherein in Formula 1-1,
* is a linking site of an element,
R, R¹, and R² are each independently hydrogen or a methyl group,
L¹² is hydrogen or a substituted or unsubstituted C₁ to C₅ alkyl group, and
L ¹¹ and L¹³ are each independently a substituted or unsubstituted C₁ to C₁₀ alkylene group.

8. The adhesive sheet as claimed in any of the claims 1 to 7, wherein the (meth)acrylic binder further comprises a unit derived from a (meth)acrylic acid ester having an alkyl group at an ester site thereof and a unit derived from a (meth)acrylic acid ester having an alkyl group substituted with at least one hydroxyl group at an ester site thereof.

9. The adhesive sheet as claimed in any of the claims 1 to 8, wherein the silicone oligomer is an oligomer of a monomer mixture comprising a silicone-containing (meth)acrylate, a (meth)acrylic acid ester having an alkyl group at an ester site thereof, and a (meth)acrylic acid ester having an alkyl group substituted with at least one hydroxyl group at an ester site thereof.

10. The adhesive sheet as claimed in any of the claims 1 to 9, wherein the silicone-containing (meth)acrylate is present in an amount of 0.01 mol% to 30 mol% in the monomer mixture based on a total 100 mol% of all monomers in the monomer mixture.

11. The adhesive sheet as claimed in any of the claims 1 to 10, wherein the silicone oligomer has a (meth)acrylate group on a side chain thereof.

12. The adhesive sheet as claimed in any of the claims 1 to 11, wherein the first adhesive layer (20) further comprises a heat curing agent and a photoinitiator.

13. The adhesive sheet as claimed in claim any of the claims 1 to 12,
wherein the first adhesive layer (20) comprises:
100 parts by weight of the (meth)acrylic binder,
0.01 parts by weight to 10 parts by weight of the silicone oligomer,
greater than 0 parts by weight and less than 20 parts by weight of the oligomer,
greater than 0 parts by weight to 3 parts by weight of the heat curing agent, and
greater than 0 parts by weight to 3 parts by weight of the photoinitiator.

14. The adhesive sheet as claimed in any of the claims 1 to 13, wherein the adhesive sheet comprises the first adhesive layer (20), a base film (30) on a first surface of the first adhesive layer (20), and a first release film (10) on a second surface of the first adhesive layer (20).

15. The adhesive sheet as claimed in any of the claims 1 to 14, wherein the adhesive sheet comprises:
the first adhesive layer (20);
a base film (30), a second adhesive layer (40), and a second release film (50) sequentially stacked on a first surface of the first adhesive layer (20); and
a first release film (10) on a second surface of the first adhesive layer (20).
